**Europäisches Patentamt**

**European Patent Office**

**Office européen des brevets**

(11) Publication number: **0 155 922**
**B1**

## (12) EUROPEAN PATENT SPECIFICATION

(45) Date of publication of patent specification: **16.12.87**

(51) Int. Cl.⁴: **F 16 M 11/12**

(21) Application number: **85850066.3**

(22) Date of filing: **01.03.85**

(54) Apparatus for adjusting the plane of an apparatus table to optional inclination and rotation.

(30) Priority: **20.03.84 SE 8401534**

(43) Date of publication of application:
**25.09.85 Bulletin 85/39**

(45) Publication of the grant of the patent:
**16.12.87 Bulletin 87/51**

(84) Designated Contracting States:
**DE GB NL**

(56) References cited:
**EP-A-0 072 624**
**EP-A-0 114 588**
**WO-A-82/00218**
**US-A-3 712 481**

(73) Proprietor: **TELEFONAKTIEBOLAGET L M ERICSSON**
**S-126 25 Stockholm (SE)**

(72) Inventor: **Lindberg, Torsten Gunnar**
**Langesandsvägen 63**
**S-430 90 Öckerö (SE)**

(74) Representative: **Biriell, Gustav et al**
**Telefonaktiebolaget L M Ericsson**
**S-126 25 Stockholm (SE)**

EP 0 155 922 B1

**Description**

Technical Field

The present invention relates to an apparatus for adjusting an apparatus table to optional inclination and rotation, in accordance with the preamble to the following claims.

Background Art

A radar aerial for observation and tracking of military targets, set up on a ship, is often mounted on a platform, also called a rotary table, and adapted such that it is kept in a horizontal position independent of the ship's movements at sea. Known tables are suspended in a gimbal ring, and motors are disposed for adjusting the table, there being a separate motor for each of the gimbal ring axes.

Rotary tables are also known in which the gimbal ring for suspension has been replaced by two rotary wedges in mutual contact, and an example of a platform arrangement of this kind is described in the Swedish Patent SE—A—8207491—5 corresponding to EPA—0114588. In the described apparatus, the apparatus table itself is prevented from taking part in the rotation of the rotary wedges by a gimbal ring with two axes. Electrical angle transducers, known per se, are arranged at either axis and connected to a servo system, with the aid of which the rotary wedges are controlled in rotation until the apparatus table assumes the desired horizontal attitude.

A mechanical wrist mechanism for positioning a work tool support member, as described in EP—A—0072624, belongs also to the background art. At that wrist mechanism the attitude of the tool support is controlled in much the same way as at the rotary table mentioned above, and its rotation is also controlled; however, its rotation is affected by the rotation of the rotary wedges of the wrist mechanism.

Disclosure of Invention

Apart from the known two rotary wedges, which are implemented as rotatable, hollow members, the apparatus in accordance with the invention contains a third rotatable hollow member, provided with a toothed end face meshing with a toothed end face on the apparatus table, and provided with a second toothed end face meshing with a toothed end face on a fourth hollow member. The third and fourth hollow members with their toothed end faces are adapted for coaction mutually and with the toothed end face of the apparatus table for determining the rotational position of the apparatus table, and they thus replace the gimbal ring used in previously known apparatus. The hollow members mentioned here and their teeth are also adapted for transferring the rotation of the fourth member to a corresponding rotation of the apparatus table.

The gear ratio of the said two pairs of toothed end faces is 1:1 for both, in order to render the rotational direction of the table independent of the positions of the first and the second hollow members.

The arrangement consisting of the third and the fourth hollow members with their toothed end faces is per se more torsionally stiff than the gimbal ring it replaces, and for the same torsional stiffness the arrangement with the members has smaller dimensions and less weight than the gimbal ring.

In the known rotary table apparatus, the radar aerial set up on the table is normally provided with a motor for azimutal rotation of the aerial, but in the apparatus in accordance with the invention this motor is replaced by a motor for rotating the fourth hollow member, whereby the aerial obtains reduced weight.

Brief Description of Drawings

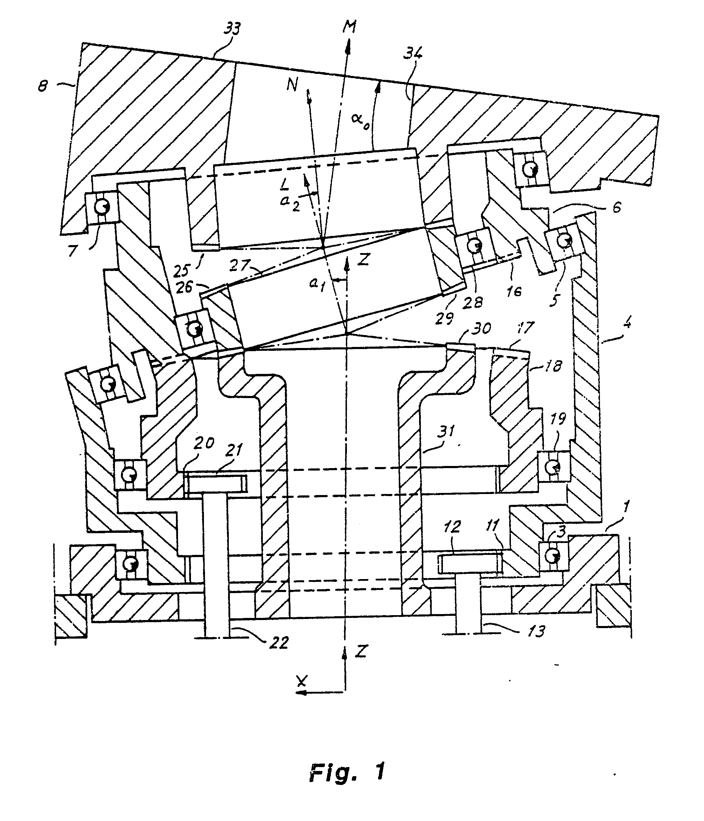

An embodiment of a rotary table apparatus in accordance with the invention is described below, with reference to the accompanying drawing, on which Figure 1 illustrates an apparatus with the fourth hollow member locked,

Figure 2 illustrates directions set out by parts in the apparatus, drawn out to a hemisphere with the apparatus at the center,

Figure 3 is a portion of Figure 2 in more detail,

Figure 4 illustrates another apparatus with the fourth hollow member rotatable, and

Figure 5 illustrates directions set out by the apparatus of Figure 4.

Embodiment of the Invention

The exemplifying embodiment of the invention described here is intended to be set up on the deck of a ship and to carry a radar aerial on the table, the plane of which is adjusted by the apparatus.

In a first embodiment the apparatus is built up, as will be apparent from the longitudinal section in Figure 1, on a bottom ring 1 which is fastened to a substructure 2, which is the ship's deck in this case. A first hollow member 4 is rotatably mounted in a first bearing 3, which is in turn mounted in the bottom ring, and has a rotational axis Z, in this embodiment parallel, and normal to, the substructure. The hollow member 4 is provided with a second bearing 5 having a rotational axis L, intersecting the rotational axis of the first bearing but having a diverging direction. A second hollow member 6 is rotatably mounted in the second bearing 5, and is provided with a third bearing 7 having a rotational axis N intersecting the rotational axis L of the second bearing 5 but having a diverging direction. The third bearing 7 is adapted for carrying an apparatus table 8, which in this case is to serve as the mounting for a radar aerial, which per se contains control means for positioning it in a desired direction in space.

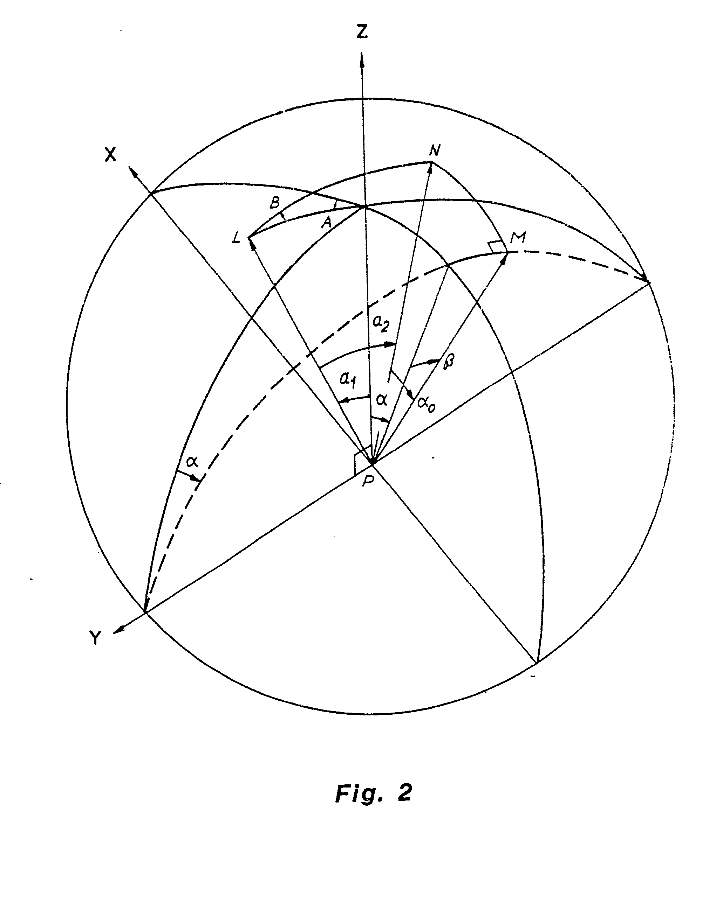

The rotational axis with the direction L of the second bearing 5 deviates, which is also apparent from Figure 2, from the rotational axis Z of the first bearing 3 by an angle $a_1$. The rotational axis N of the third bearing 7 deviates from the rotational axis L of the second bearing by an angle $a_2$.

In the illustrative embodiment the angles $a_1$ and

$a_2$ are alike, but in alternative embodiments the angles are different from each other.

By rotating both wedge-shaped hollow members 4, 6, also called rotary wedges, in their bearings it is possible to give the rotational axis N of the third bearing any direction in relation to the normal direction Z, within the limits of the adjustment range of the apparatus.

For rotation to an intended position, the first hollow member 4 is provided with an toothed rim 11. A first drive pinion 12 is adapted to mesh with this rim. The drive pinion is connected by a first drive shaft 13 to a first drive motor (unillustrated) for positioning the first member 4. In the embodiment the drive motor is an electric motor, but in other applications the motor can be of some other type. For turning to its intended position the second hollow member 6 is provided with a toothed end face 16 meshing with a toothed end face 17 on an intermediate ring 18 mounted in the first member 4 by a bearing 19 having its rotational axis coinciding with the axis Z of the first bearing 3. The intermediate ring 18 is further implemented with an internal toothed rim 20, meshing with a second drive pinion 21. The drive pinion 21 is connected by a second drive shaft 22 to a second drive motor for positioning the second hollow member 6, the drive motor being of the same kind as the drive motor for positioning the first hollow member 4.

The first member 4 is rotated by its drive motor the angel A in Figure 2, counted from an initial direction, and the second member 6 is turned by its drive motor the angle B, counted from the direction in which the first hollow member 4 has been positioned, or in other words the angle A+B from the initial direction.

For positioning the apparatus table 8 rotationally, which in this first embodiment is the same as its rotational position being kept unchanged, it is provided on its underside with a toothed end face 24 meshing with a corresponding toothed end face 26 on a third hollow 27. The third member is mounted in the second hollow member 6 with the aid of a bearing 28 such that the rotational axis of the third hollow member coincides with the rotational axis L of the second hollow member.

At the other end of the third hollow member 27, opposite to the toothed end face 26 there is also a toothed end face 29 meshing with a complementary toothed end face 30 on a fourth hollow member 31. The fourth hollow member 31 is rigidly connected to the bottom ring 1 of the apparatus, and thereby with the substructure 2, i.e. with the ship's deck.

The paired toothed end faces 16—17, 25—26, 29—30 are to advantage formed with bevel gears; alternatively, other types of toothed end face may be used. The gear ratio in each pair is 1:1.

If the first member 4 is rotated while the second member 6 is restrained, the second member will change inclination and its toothed end face 16 will change mesh with the toothed end face 17 of the intermediate ring 18 with unaltered rotational position. The lower toothed end face 29 of the third member 27 will also change mesh with the toothed end face 30 of the stationary fourth member 31 with unaltered rotational position. The toothed end face of the apparatus table 8 will also roll on the upper toothed end face 26 of the third member 27 with unaltered rotational position.

For rotation solely by the second hollow member 6, the third member 27 will roll on the fourth member 31, and the apparatus table 8 will roll on the third member with unaltered rotational positions.

By selecting gear ratios 1:1, the apparatus table 8 will in all conditions maintain in an unaltered rotational position while its inclination is varied.

For adjusting the direction N parallel to the direction Z it is required in the described embodiment, where the angles $a_1$ and $a_2$ are the same, that the angle B is zero, but the angle A for the first member can then have any value at all, it is indeterminate. The drive motor for adjusting the angle A can then not be controlled to assume a given position; the direction Z points to a so-called singular point. Directions in the vicinity of the direction Z are also difficult to adjust with the servo system, because the gear ratio from the drive motors to the pointed-out direction N in that area deviates strongly from the normal. There are therefore good reasons for avoiding adjusting the direction N too close to the direction Z.

In the illustrative embodiment, the adjustment of the direction in the vicinity of the singular point is avoided with the aid of an added inclination between the substructure 2 and the plane 33 of the apparatus table 8. Here the inclination is inserted between the third bearing 7 with the rotational axis N and the apparatus table plane 33 with the normal direction M, the inclination being denoted by $a_0$ in the Figures.

The described embodiment is intended for setting up on a ship to compensate for its pitching and heeling movements, so that the plane 33 of the apparatus platform is horizontal, independent of ship movements, i.e. the normal M of the plane is vertical.

The conditions are illustrated by Figure 2, where a plane defined by the axes X and Y is the ship deck, the X axis being directed aft and the Y axis starboard, to the right. The third axis Z is directed upwards from the deck at right angles to it, and may be said to indicate the ship's mast direction. It will be seen from Figure 2 that the rotational angle A of the wedge-shaped hollow member 4 is measured starting from the X—Z plane.

The vessel is equipped with a plumb gyro adapted to indicate plumb during the stamping and heeling movements of the vessel. The plumb gyro contains a direction indicating portion which gives the plumb direction, it being suspended in a gumbal system with two perpendicular axes. One of these gimbal axes passes through bearings connected to the vessel, and it is assumed that this axis is parallel to the Y axis in Figure 2.

Movement about the axis denotes the pitching angle, denoted by $\alpha$ in Figure 2. Movement about the second gimbal axis of the plumb gyro denotes the vessel's heeling angle, denoted by $\beta$ in Figure 2.

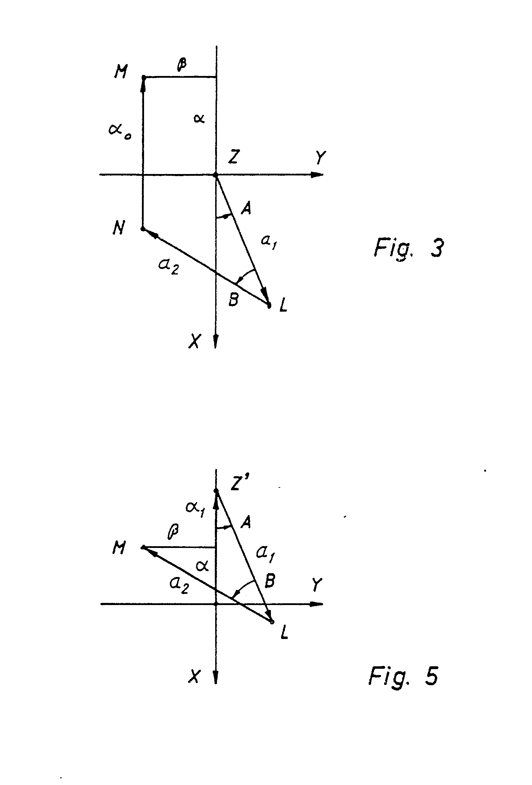

The same situation illustrated by Figure 2 is also illustrated more schematically in Figure 3, which is a description of the central area around the direction Z with the directions projected onto a plane.

For each desired position of the plane 33 of the apparatus table in angles $\alpha$ and $\beta$ there are calculated what adjustments shall be made to the first hollow member 4 and to the second hollow member 6. The drive shafts 13, 22 of the drive motors coact with angle-measuring means associated with the axes for positioning the members.

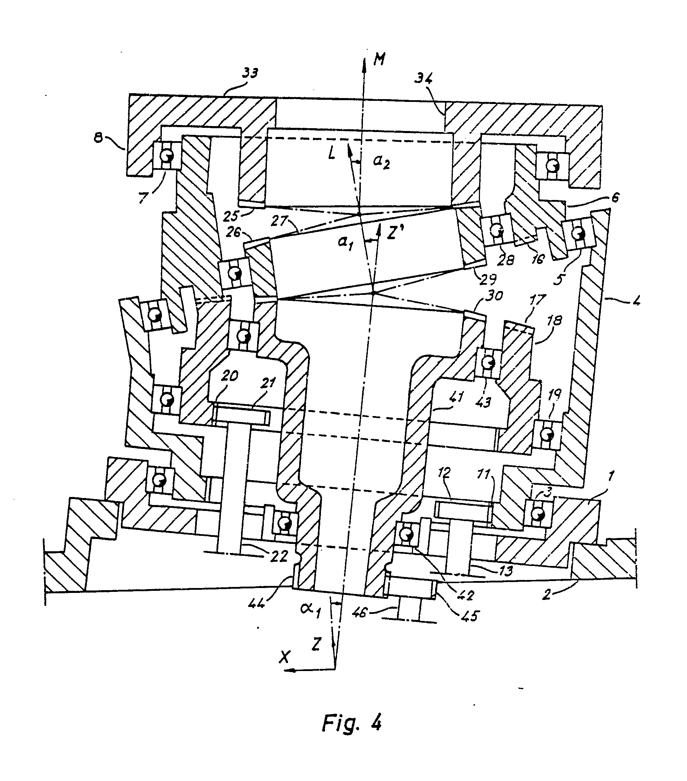

The positioning apparatus described so far is a special case of an apparatus described in the following. In this there are included, as illustrated in Figure 4, a first, a second and third hollow member 4, 6, 27 with bearings arranged as in the previously described embodiment. The fourth hollow member 41 is in this embodiment rotatably mounted in a bearing 42 having a rotational angle coinciding with that of the first member 4. For the sake of stability in this alternative embodiment, the fourth member is also supported by a bearing 43 between the member and the intermediate ring 18.

The fourth hollow member 41 is, as with the ones previously described, implemented with a toothed end face 30 for meshing with the complementary toothed end face 29 of the third member 27. The opposite end of the fourth member is provided with an external toothed rim 44 meshing with a drive pinion 45 provided with a shaft 46. A drive motor is coupled to the shaft 46 for rotation thereof, and an angle measuring means connected to the shaft coacts for adjusting the rotational position of the fourth hollow member. The drive motor and angle measuring means are not illustrated in the Figure.

If the fourth member 41 is restrained by its drive motor, rotation of the table 8 will be prevented, as with the embodiment described first. When the fourth member 41 is rotated about its axis by its drive motor, its rotation will be transferred to the table 8 as a rotation about its axis M, via the toothing provided on the fourth member, on the third member 27 and on the apparatus table 8. This rotation will be independent of the position of the first and the second hollow member 4, 5, which determine the direction of the axis M. Since the axis M is intended to be vertical, the angle by which the table is turned should be called the azimuth angle. In this way a special motor for azimuth positioning on an aerial set up on the apparatus platform plane 33 becomes superfluous.

In this second embodiment the apparatus table plane 33 is suitably at right angles to the rotational axis of the third bearing 7 and not inclined, as in the embodiment first described. A rotation of the table due to a rotation of the fourth hollow member 41 would cause in an inclined table surface an angular deviation from the intended direction of the surface normal M and would complicate positioning of the first and the second hollow member. For ensuring the avoidance of positioning on a singular point, i.e. a point where the inclinations of the first member 4 and the second member 6 entirely counteract each other, an inclination with an angle $\alpha_1$ is introduced in this embodiment between the bottom ring 1 and substructure 2 of the apparatus.

The axis of the first member 4 thus obtains the direction Z', which deviates from the normal direction Z of the substructure, see also Figure 5.

In the described apparatus tables, angle indicators known per se, e.g. magnetic angle indicators, are arranged on the shafts of the drive motors. Alternatively, code strips or code discs for angular measurement are placed directly on the rotary wedges 4, 6 and on the fourth hollow members 41, and scanners known per se, e.g. optical scanners, are adapted for scanning the angles.

For both embodiments of the positioning apparatus, with the special implementation where the mechanism for positioning is enclosed in the rotatable members 4, 6, there is achieved the particular advantage that the mechanism is protected against water from the seas washing over the vessel by the members and by seals at their bearings.

There is a central hole 34 in the table 8. Cables and wave conductors intended for the apparatus set up on the table can be taken through the hole 34 and through the openings in the third member 27 and fourth member 31, 41.

**Claims**

1. Apparatus for positioning the plane (33) of an apparatus table (8) in an optional inclination in relation to the plane of a substructure (2), and for positioning the table (8) in rotation, in which apparatus there is included a first hollow member (4) rotatably mounted on a bearing (3) in communicaton with the substructure (2), the member (4) being provided with a second bearing (5) having a rotational axis (L) with a direction deviating from the rotational axis (Z, Z') of the first bearing (3),
a second hollow member (6), rotatable mounted in the second bearing (5) in the first member (4), and provided with a third bearing (7) having a rotational axis (N, M) with a direction deviating from that (L) of the second bearing,
said third bearing (7) being adapted to carry the apparatus table (8), whereby positioning the plane (33) of the apparatus table (8) in the selected inclination the normal to the table in a selected direction (M) being achieved by a combination of angular rotations of both rotatable hollow members (4, 6),
the positionable apparatus table (8) being provided with a toothed end face (25) in mesh with a corresponding toothed end face (26) on a third sleeve (27), mounted rotatable about an axis coinciding with the axis (L) of the second member, and provided with a second toothed end face (29) at its opposite end, in mesh with a corresponding toothed end face (30) on a positionable fourth hollow member (31, 41), with its rotational axis coinciding with that (Z, Z') of the first bearing (3), the fourth hollow member (31, 41) and the third sleeve (27) cooperating in order to position the table (8) in rotation, the gearing between the table (8, 25) and the third sleeve (27) and between the third sleeve (27) and the fourth hollow member (31, 41) having gear ratio 1:1 in order to render the rotational direction of the table (8) independent of the positions of the first and the second hollow members (4, 6).

2. Apparatus as claimed in claim 1, characterized by an arrangement for restraining the fourth hollow member (31) in a selected rotational position.

**Patentansprüche**

1. Vorrichtung zum Einstellen der Ebene für ein Gerät in wählbare Inklination in bezug auf die Ebene eines Unterbaus (2) und für die Positionierung des Tisches (8) in Rotation mit einem ersten hohlen Element (4), drehbar gelagert in einem Lager (3), in Verbindung mit dem Unterbau (2), das mit einem zweiten Lager (5) ausgestattet ist, das eine Rotationsachse (L) besitzt, die von der Richtung der Rotationsachse (Z, Z') des ersten Lagers (3) abweicht, einem zweiten hohlen Element (6), drehbar gelagert in dem zweiten Lager (5), in dem ersten Element (4) und das mit einem dritten Lager (7) ausgerüstet ist, das eine Rotationsachse (N, M) besitzt, die von der Richtung der Achse (L) des zweiten Lagers abweicht, wobei das dritte Lager (7) dafür vorgesehen ist, den Gerätetisch (8) zu tragen, wodurch bei der Positionierung der Ebene (33) des Gerätetischs (8) in eine gewählte Inklination die Senkrechte zu dem Tisch in einer gewählten Richtung (M) durch die Kombination der Rotation der beiden drehbaren hohlen Elemente (4, 6) erzielt werden kann, wobei der positionierbare Gerätetisch (8) mit einer verzahnten Oberfläche (25) ausgerüstet ist, die mit einer korrespondierenden verzahnten Oberfläche (26) auf einem dritten hohlen Element (27) kämmt, das drehbar um eine Achse, die mit der Achse (L) des zweiten Elements zusammenfällt, befestigt ist und das mit einer zweiten verzahnten Oberfläche (29) auf der gegenüberliegenden Seite ausgerüstet ist, die mit einer korrespondierenden verzahnten Oberfläche (30) auf einem positionierbaren vierten hohlen Element (31, 41) kämmt, dessen Rotationsachse mit der Achse (Z, Z') des ersten Lagers (3) zusammenfällt, wobei das vierte hohle Element (31, 41) und das dritte hohle Element (27) zusammenarbeiten, um den Tisch (8) in Rotation zu positionieren, wobei das Getriebe zwischen dem Tisch (8, 25) und dem dritten hohlen Element (27) und zwischen dem dritten hohlen Element (27) und dem vierten hohlen Element (31, 41) ein Getriebeverhältnis von 1:1 aufweisen, um die Drehrichtung des Tisches unabhängig von der Position des ersten und des zweiten hohlen Elements (4, 6) zu übertragen.

2. Vorrichtung nach Anspruch 1, gekennzeichnet durch eine Anordnung zum Festhalten des vierten hohlen Elements (31) in einer ausgewählten Drehstellung.

**Revendications**

1. Appareil pour positionner le plan (33) d'une table (8) d'appareil dans une inclinaison facultative par rapport au plan d'une infrastructure (2), et pour positionner la table (8) en rotation, appareil dans lequel il est inclus un premier élément creux (4) monté de façon à tourner dans un palier (3) en liaison avec l'infrastructure (2), l'élément (4) étant équipé d'un deuxième palier (5) ayant un axe de rotation (L) dont la direction s'écarte de l'axe de rotation (Z, Z') du premier palier (3), un deuxième élément creux (6) monté de façon à pouvoir tourner dans le deuxième palier (5) dans le premier élément (4) et équipé d'un troisième palier (7) ayant un axe de rotation (N, M) dont la direction s'écarte de celle (L) du deuxième palier, ledit troisième palier (7) étant conçu pour porter la table (8) d'appareil, de manière à positionner le plan (33) de la table (8) d'appareil dans l'inclinaison choisie, la normale à la table dans une direction choisie (M) étant obtenue par une combinaison de rotations angulaires des deux éléments creux (4, 6) pouvant tourner, la table (8) d'appareil pouvant être positionnée étant équipée d'une face extrême dentée (25) en prise avec une face extrême dentée correspondante (26) située sur un troisième manchon (27), monté de façon à pouvoir tourner autour d'un axe coïncidant avec l'axe (L) du deuxième élément, et présentant une seconde face extrême dentée (29) à son extrémité opposée, en prise avec une face extrême dentée correspondante (30) située sur un quatrième élément creux (31, 41) pouvant être positionné, son axe de rotation coïncidant avec celui (Z, Z') du premier palier (3), le quatrième élément creux (31, 41) et le troisième manchon (27) coopérant pour positionner la table (8) en rotation, l'engrènement entre la table (8, 25) et le troisième manchon (27) et entre le troisième manchon (27) et le quatrième élément creux (31, 41) établissant un rapport d'engrenage 1:1 afin de rendre le sens de rotation de la table (8) indépendant des positions des premier et deuxième éléments creux (4, 6).

2. Appareil selon la revendication 1, caractérisé par un agencement destiné à retenir le quatrième élément creux (31) dans une position choisie en rotation.

**0 155 922**

Fig. 1

**Fig. 2**

Fig. 3

Fig. 5

Fig. 4